# EUROPÄISCHE PATENTANMELDUNG

(11) **EP 2 179 978 A2**
(43) Veröffentlichungstag der Anmeldung: **28.04.2010**
(21) Anmeldenummer: 09013389.3
(22) Anmeldetag: 23.10.2009
(51) Int. Cl.: C05F 3/00, C05F 17/00, A01C 3/02

(54) **Die Erfindung betrifft ein Verfahren zur regulierten Fermentation von Güllen, mit welchem unter einem die Stickstoffverluste, die Viskosität und die Geruchsemissionen vermindert werden können**

(30) Priorität: 27.10.2008 AT 16722008
(71) Anmelder: Gilhofer, André, 4170 Haslach (AT)
(72) Erfinder: Gilhofer, André, 4170 Haslach (AT)
(74) Vertreter: Landgraf, Elvira

(57) **Zusammenfassung**

Die Erfindung betrifft ein Verfahren zur regulierten Fermentation von Gülle durch kontinuierliche Einstellung des pH-Wertes, sowie eine Vorrichtung zur Durchführung des Verfahrens.

## Beschreibung

Die Erfindung betrifft ein Verfahren zur regulierten Fermentation von Güllen, mit welchem unter einem die Stickstoffverluste, die Viskosität und die Geruchsemissionen vermindert werden können.

Landwirtschaftliche Güllen sind Gemische von tierischem Kot und Harn, wie sie in Viehzuchtbetrieben anfallen, gesammelt werden und nach Behandlung oder Lagerung auf landwirtschaftliche Flächen als wertvoller Dünger ausgebracht werden.

Güllen enthalten im Allgemeinen über 90% ihrer Masse an Wasser und sind Mehrphasensysteme. Sie enthalten Salze, unverdaute und halbverdaute Nahrungsbestandteile, Verdauungsprodukte, Magensäfte und Zellmasse von im Magen-Darm-Trakt gewachsenen Mikroorganismen. Auch vitale Zellen dieser Mikroorganismen stellen einen signifikanten Masseanteil an der Gülle dar. Der Gehalt an ungelösten Feststoffen liegt bei der überwiegenden Mehrzahl von Güllen zwischen 2% und 8% der Gesamtmasse. Die Konzentration von gelöstem Ammonium liegt zwischen einem und vier Gramm pro Liter Gülle. Die pH-Werte liegen aufgrund des anaeroben Abbaus überwiegend im alkalischen Bereich. Drei Viertel aller Rindergüllen zeigen einen pH-Wert über 7,0 mit Maximalwerten bis knapp über 8,5 und bei vier Fünftel der Schweinegüllen liegt der pH-Wert zwischen 7,0 und 8,2. Auch andere wichtige mineralische Düngestoffe wie Phosphat und Kalium sind in der Gülle vorhanden. Je nach Tierart unterscheiden sich die chemischen Zusammensetzungen der Güllen geringfügig voneinander, sie sind vornehmlich von der Tierernährung abhängig. So enthält Schweinegülle oft höhere Anteile an Fetten und Proteinen als Rindergülle, wobei letztere dagegen oft verstärkt cellulose- und hemicellulosehältige Faserbestandteile aufweist.

Neben den wertvollen Inhaltsstoffen, die für die Düngung von landwirtschaftlichen Flächen von großem Nutzen sind, weisen Güllen auch Bestandteile auf, die für ihre weitere Verwendung unvorteilhaft sind. Dazu zählen beispielsweise Gallenstoffe und Gallensäuren, die durch ihre schleimartige Konsistenz eine Erhöhung der Viskosität von Gülle bewirken und so die Pump- und Rührfähigkeit während ihrer Lagerung oder ihres Transportes beeinträchtigen. Eine hohe Viskosität senkt ungünstigerweise auch das Infiltrationsvermögen der Gülle in den landwirtschaftlichen Boden. Andere unvorteilhafte Bestandteile der Gülle sind geruchsaktive Stoffe wie Ammoniak, Schwefelwasserstoff, para-Kresol, Phenole, Indole, Merkaptane, Sulfide, Ketone, Phosphine, Amine wie Putrescin und Cadaverin sowie flüchtige Fettsäuren. Diese für den Menschen unangenehm riechenden und zum Teil toxischen Substanzen sind Zwischen- oder Endprodukte des Abbaus und der Zersetzung des Futters, der Magensäfte sowie der mikrobiellen Zellmasse und bilden sich bereits im Verdauungstrakt und vor allem bei der Lagerung. Untersuchungen zum Wurzellängenwachstum zeigten, daß frische Gülle mit Ausnahme von Ammoniak keine nennenswerten Boden- oder Pflanzenschadstoffe aufweist. Die Gülle enthält auch eine große Anzahl verschiedener Mikroorganismen, die hauptsächlich aus dem Verdauungstrakt der Tiere stammen, und zu einem geringen Anteil während der Sammlung und Lagerung in die Gülle gelangen. Sie sind überwiegend Enterobacteriaceae, Streptokokken, Eubacteriumarten, Bacteroidesarten, Lactobacilli und Clostridia. In geringerer Menge gelangen auch zahlreiche andere Arten in die Gülle. Je nach dem chemischen Milieu der Gülle während der Lagerung oder einer Behandlung steigt oder sinkt ihre Aktivität.

Da landwirtschaftliche Güllen offensichtlich komplexe Gemische verschiedenster chemischer Substanzen und Mikroorganismen darstellen, finden in ihnen und in Wechselwirkung mit der umgebenden Gasatmosphäre bereits bei der Sammlung, Lagerung und allfälliger Nachbehandlung ständig chemische, physikalisch-chemische und biochemische Reaktionen statt, die sie in ihrer Zusammensetzung verändern.

Einen wesentlichen Einfluss auf viele dieser Reaktionen besitzt beispielsweise der pH-Wert. Umgekehrt ergibt sich der pH-Wert selbst aus der chemischen Zusammensetzung. So werden zum Beispiel einige geruchsaktive Stoffe in Abhängigkeit des pH-Wertes und ihrer Konzentration aus den Güllen gemäß ihrer wässrigen Dissoziationsgleichgewichte emittiert. Ammoniak wird ausschließlich nur im basischen Bereich emittiert, im sauren Bereich Schwefelwasserstoff und flüchtige Fettsäuren. Andere geruchsaktive Stoffe zeigen nur geringe Abhängigkeiten ihrer Emissionsintensität vom pH-Wert. Ein anderes Beispiel für eine biochemische Veränderung von Gülle ist die enzymatische Umsetzung von Harnstoff in Ammoniak und Kohlendioxid, die durch das in der Gülle vorhandene Enzym Urease vor allem bei Temperaturen über 10 °C katalysiert wird. Diese Reaktion bewirkt daher einen Anstieg der Ammoniumkonzentration in harnstoffhältigen Güllen. Gasförmige Emissionen sind aber aus zweierlei Gründen unerwünscht: Sie führen zur Verbreitung von schlechten Gerüchen, die als Belästigung empfunden werden, und sie bewirken durch die Emission von Ammoniak einen Verlust des Ammonium-Stickstoffs bei der Lagerung und Ausbringung, so daß dieser flüchtige Anteil als Nährstoff für die Düngung dann nicht mehr zur Verfügung steht.

In der Praxis wird die Gülle üblicherweise nach ihrer Sammlung im Güllekanal bis zu ihrer Ausbringung auf landwirtschaftliche Flächen in Senkgruben oder anderen Güllebehältern gelagert. Die Güllekanäle sind möglichst nahe am Ausscheidungsort der Tiere angebracht, damit sie rasch die frischen Exkremente nach dem Absetzen aufnehmen können. Von dort gelangt die Gülle direkt in das Güllelager. In manchen Betrieben wird die Gülle im Güllelager von Zeit zu Zeit durch Rühren homogenisiert, um die dauerhafte Bildung von Sink-und Schwimmschichten zu vermeiden. Fallweise werden die Güllen auch in Biogasanlagen zur Gewinnung von Methangas eingesetzt oder durch mechanische Trennvorgänge in eine feststoffarme und eine feststoffreiche Güllefraktion aufgeteilt, die unterschiedlich verwendbar sind.

Weitergehende Behandlungen von Güllen sind aus Kostengründen in der Praxis nicht weit verbreitet. Sie werden vereinzelt durchgeführt, um einen oder mehrere der nachfolgend angeführten Effekte zu erreichen:
- Möglichst vollständiger Erhalt des in der Gülle enthaltenen Stickstoffs,
- möglichst pflanzenverträgliche Form der Gülle,
- Verringerung der durch die Gülle hervorgerufenen Geruchsbelästigung,
- Verringerung der Viskosität der Gülle. Dadurch wird neben dem geringeren mechanischen Aufwand beim Pumpen und Rühren der Gülle auch eine raschere Aufnahme der Güllenährstoffe in den Boden bewirkt, wodurch die Pflanzenverträglichkeit steigt und die Emissionsverluste an Ammoniak und Schwefelwasserstoff verringert werden.

Als Behandlungsverfahren von Güllen wird üblicherweise entweder die Belüftung oder die Zugabe von Additiven oder seltener eine Kombination aus beiden angewendet. Die Belüftung zielt darauf ab, mikrobielle aerobe Abbauvorgänge anzuregen, wie sie in der Kompostierung vorherrschen. So sollen damit Geruchsstoffe und besonders flüchtige Fettsäuren und Schwefelwasserstoff abgebaut werden, wodurch die Geruchsbelästigung der Gülle sinken soll.

Die einfachste Form der Anwendung von Additiven besteht in der Zugabe von Wasser, womit eine Reduktion der Ammoniakemission und die Senkung der Viskosität der Gülle begünstigt wird. Absorptiv wirkende Additive wie spezielle Tonminerale oder Algenprodukte sollen Geruchsstoffe binden. Andere säurehältige Additive sollen den pH-Wert der Gülle senken und dadurch Verluste von Stickstoff und Geruchsbelästigungen durch Ausgasung des flüchtigen Ammoniaks verhindern. Wieder andere Additive auf Basis von Enzymen oder Mikroorganismen sollen Geruchsstoffe oder Gallenstoffe spalten und dadurch die Viskosität der Gülle verringern.
Ohne intensive mechanische Behandlung durch Rühren oder Belüften und ohne Zusätze ergibt sich in der Gülle ein unregulierter Ablauf von Umsetzungsvorgängen, die zu einer zufälligen Zusammensetzung der Gülle führen. So kann der pH-Wert durch den Eiweißabbau auf bis über 8,5 ansteigen, oder sich wie in wenigen Fällen durch eine spontan eintretende Gärung ein pH-Wert von knapp unter 6,5 einstellen. Die unterschiedlichsten pH-Werte in der Praxis zeigen auf, daß die Qualität der Gülle ein Zufallsergebnis ist.

Im Verfahren EP 0612 704 B1 "Verfahren zur Ansäuerung von Flüssigmist, in welchem Ammoniak gebunden ist und Kohlendioxid freigesetzt wird" erfolgt eine einmalige Einstellung des pH-Wertes auf einen Wert von unter 6,5 und dann ein Zusatz von säureproduzierenden Bakterien. Die Einleitung von Luft oder Sauerstoff durch Rühren oder Belüftung, um die Bedingungen aerob zu gestalten oder daß aerobe Mikroben gedeihen können bleibt ausdrücklich ausgeschlossen. Durch die mindestens einmalige Mischung pro Woche zur Homogenisierung ist ein weitgehend anaerober Ablauf der Umsetzungsprozesse zu erwarten. Eine starke Versäuerung bis zu pH 4,5 ist möglich, wodurch unter diesen konservierenden Bedingungen eine Stagnation der Mikrobentätigkeit eintritt. Der niedrige pH-Wert führt zu einer Freisetzung von Kohlendioxid aus den Karbonatsalzen der Gülle, so daß man bei diesem Verfahren von einem unregulierten, ausschließlich auf einer Säurebildung beruhendem Ablauf einer Fermentation sprechen kann.

Zusammenfassend werden nach derzeitigem Stand der Technik zur Aufbereitung von Güllen im Hinblick auf die Vermeidung von Nährstoffverlusten und beziehungsweise oder die Reduktion von Geruchsemissionen folgende Maßnahmen und Verfahren angewandt:
- Verdünnung der Gülle mit Wasser zur Herabsetzung der Viskosität, um den Gasaustausch zu verbessern und eine sanfte Gärung durch den Sauerstoffgehalt des Wassers anzuregen.
- Belüftung der Gülle in unterschiedlichster Intensität zur Anregung des oxidativen Abbaus unter Erwärmung und Absenkung des pH-Wertes.
- Zusatz von mikrobiologischen Präparaten, beispielsweise säurebildende Organismen.
- Zusatz von Addditiven pflanzlicher Herkunft (Meeeresalgen, Algenextrakte, Kräuter, ätherische Öle, Zuckersäuren, emulgierte Öle, Vitaminöle, Pflanzenseifen, Huminstoffe).
- Zusatz von organisch-chemischen Addditiven (Karbonsäuren, Cyanamid).
- Zusatz von anorganischen Komponenten (Algenkalke, Tone, Gesteinsmehle, Oxide von Mittelelementen, Spurenelemente).
- Zusatz von Säuren wie Schwefelsäure, Salpetersäure und Milch- oder Zitronensäure.

Die Wirksamkeit dieser Maßnahmen und Additive ist im Bezug auf die gesetzten Ziele aus folgenden Gründen als sehr unterschiedlich zu bewerten:
- Die Zusammensetzung und Eigenschaft von Gülle ist in Bezug auf Trockenmasse, Stickstoffgehalt und pH-Wert ein sehr heterogenes Gemisch und es liegen dazu in der Praxis selten Analysedaten zur gezielten Regelung des Prozesses zur Güllebehandlung vor.
- Die Zusatzstoffe sind aufgrund der fehlenden Information zu den jeweiligen Eigenschaften der Gülle nicht konkret auf die jeweilige Gülle abgestimmt und es unterbleiben daher oft die notwendigen Umwandlungsreaktionen, so dass keine gezielten Wirkungen erreicht werden können.
- Behandlungsmethoden wie Belüftung und/oder Rühren verursachen bei den am Markt angebotenen technischen Einrichtungen hohen Energieeinsatz zwischen 20 und 60 kWh/m³.

Aus Kostengründen steht daher auch eine Kombination dynamischer Verfahren mit gleichzeitiger Zugabe von Additiven im Sinne eines biotechnologischen Prozesses oder eine Trennung von flüssiger und fester Phase nach dem bisherigen Stand der Technik einer breiten Anwendung entgegen.

Dies hat zur Folge, dass bei der derzeit in der landwirtschaftlichen Praxis üblichen Lagerung der Gülle die chemischen Veränderungen und die in der Gülle ablaufenden Fermentationen einen unregulierten und somit zufallsbetonten Verlauf nehmen, wobei der Begriff "Fermentation" die durch biochemische Reaktionen von Mikroorganismen verursachte Veränderung der chemischen Zusammensetzung der Gülle bezeichnet. Eine Fermentation der Gülle wird dann als reguliert bezeichnet, wenn Gülleeigenschaften wie die chemische Zusammensetzung durch gezielte Maßnahmen und Kontrollmessungen gleichzeitig qualitativ und quantitativ in gewünschter Weise verändert werden, so dass die Veränderung als gelenkt betrachtet werden kann. Durch Zusatz bestimmter Bakterienkulturen, wie dies im Verfahren EP 0612 704 B1 geschieht, kann zwar durch eine Fermentation eine Versäuerung herbeigeführt werden, jedoch ist ohne periodischer Kontrolle des pH-Werts sowie ohne die kontinuierliche Durchmischung und ohne gezielte Belüftung eine zu starke Versäuerung zu erwarten, die die Pflanzenverträglichkeit der so behandelten Gülle deutlich vermindert und den Geruch durch Emission flüchtiger organischer Säuren deutlich erhöht. Diese Versäuerung führt zu nicht vorhersagbaren pH-Werten unter pH 6,0 und zum Erliegen der mikrobiologischen Aktivitäten als Folge der toxischen Wirkung des niedrigen pH-Wertes und der hohen Säurekonzentration auf die Mikroorganismen der Gülle.

Aufgabe der Erfindung ist es deshalb, ein geeignetes Verfahren zu finden, mit dem eine regulierte Fermentation von gelagerter und frisch zulaufender landwirtschaftlicher Gülle derart erfolgt, dass die mikrobiellen und chemischen Umsetzungen in der Gülle bei einem bestimmten, konstant gehaltenen pH-Wert im Bereich zwischen 6,0 und 7,0 mit einer geringen Schwankungsbreite von ± 0,2 ablaufen können und zu einem weitgehenden Abbau von Gallenstoffen und bereits vorhandenen organischen Geruchsstoffen sowie zu einem gleichzeitigen mikrobiellen Abbau von flüchtigen Fettsäuren führen, womit sowohl eine Senkung von Nährstoffverlusten durch das Vermeiden von Ammoniakemissionen, als auch eine Verringerung der Viskosität, als auch eine Senkung der Geruchsemissionen erzielt wird. Diese Effekte werden als gewünschte Effekte bezeichnet.

Um weiters den Aufwand an Energie und Additiven möglichst niedrig und damit das Verfahren soweit kostengünstig zu gestalten, dass eine wirtschaftlich vertretbare Anwendung in der Praxis möglich wird, sollen die gewünschten mikrobiellen und chemischen Umsetzungen in der Gülle durch eine regulierte Fermentation mit Hilfe der bereits in der Gülle vorhandenen Mikroorganismen bewirkt werden und nicht durch einen Zusatz von bestimmten Mikroorganismenstämmen oder Enzymen. Vielmehr sollen die Stoffwechselaktivitäten jener mikrobiellen Populationen begünstigt werden, die maßgeblich zu den gewünschten Effekten beitragen, bei gleichzeitiger Hemmung aller jener Mikroorganismen, die durch ihre Stoffwechselaktivität die gewünschten Effekte beeinträchtigen, ohne dass es notwendig sein muss, die an den Umsetzungen beteiligten Mikrobenpopulationen zu kennen oder zu beobachten.

Die Aufgabe wird dadurch gelöst, dass die Gülle innerhalb von 3 Tagen nach dem Absetzen der Fäkalien in ein nach oben offenes, zwischen Güllekanal und Güllelager eingebautes Behältnis zur kontrollierten Fermentation, weiter bezeichnet als Fermentationsbehälter, eingeleitet wird, in dem die mittlere Verweildauer der Gülle mindestens 1 h und maximal 10 Tage beträgt, und in dem die Gülle durch eine geeignete, als Propeller, Paddel, Schraube oder auch Schnecke ausgelegte Rührvorrichtung in eine horizontal kreisende Fließbewegung um eine mittig im Behältnis angebrachte Wand oder um ein bauliches Trennelement gezwungen wird, und die Rührvorrichtung mit einer Umdrehungsfrequenz von mindestens 20 bis maximal 200 Umdrehungen pro Minute und einer Blattspitzengeschwindigkeit von maximal 95 m/min und einer maximalen Fleißgeschwindigkeit der Gülle von 20 m/min jedenfalls eine schraubenförmige Durchmischung im gesamten Querschnitt des Fermentationsbehälters auf zumindest einer Seite der mittig angebrachten Wand oder des Trennelements und an mindestens einer Stelle bewirkt, und der Fermentationsbehälter mit mindestens einer Messvorrichtung für den pH-Wert und einer Dosiervorrichtung für Säuren oder säurehältige Flüssigkeiten ausgelegt ist, und die laufende pH-Messung durch steuerungstechnische Verknüpfung mit der Dosier-vorrichtung eine periodische Dosierung von Säuren so weit zur Folge hat, dass damit ein erwünschter eingestellter pH-Wert im Bereich zwischen pH 6,0 bis 7,0 permanent aufrechterhalten wird.

Die mittlere Verweildauer der Gülle im Fermentationsbehälter ergibt sich rechnerisch aus der Division des durchschnittlichen Güllevolumens im Behältnis durch das Volumen der täglich zugeführten Gülle und wird in Tagen ausgedrückt. Im Sinne der Erfindung ist die regulierte Fermentation ein kontinuierliches Verfahren, bei dem im laufenden Betrieb täglich so viel unbehandelte Gülle in das besagte Behältnis zugeführt wird, wie annähernd aus ihm ausfließt, wodurch der Füllstand an Gülle im Behältnis im Wochendurchschnitt annähernd konstant bleibt.

Als Trennelement wird eine Einbauvorrichtung im besagten Behältnis bezeichnet, die die Fließbewegung der Gülle in die gewünschte horizontal kreisende Form zwingt.

Ein wesentlicher Effekt der Erfindung ist, dass sich durch die erfindungsgemäße ruhige Fließbewegung der Gülle und ihres erfindungsgemäß permanent schwach sauren pH-Wertes in dem an die täglich anfallende Güllemenge angepassten Fermentationsbehälter hinsichtlich des Wachstums von Mikroorganismen ein mikroaerobes Milieu einstellt, in dem strikt anaerobe Mikroorganismen und unerwünschte Mikroorganismen, die ihr pH-Optimum außerhalb des eingestellten pH-Bereiches besitzen, in ihrer Stoffwechselaktivität und in ihrem Wachstum beeinträchtigt werden, wohingegen aerotolerante und mikroaerophile Mikroorganismen mit einem pH-Optimum im Bereich zwischen pH 6,0 und pH 7,0 bevorzugt gedeihen können. Für das Verfahren günstige Mikroorganismenarten, deren Stoffwechselaktivitäten gefördert werden sollen, sind beispielsweise Bacilli, Pseudomonaden, Bifidobacterien, Propionibacterien, Acetobacter, Thiobacilli, Lactobacilli und Hefen, da sie Schwefelwasserstoff zu Schwefel oxidieren, organische Geruchsstoffe und Gallenstoffe abbauen sowie Ammonium in stickstoffreichen Polymere sowie Zellmasse binden. Für das Verfahren unerwünschte Mikroorganismenarten sind beispielsweise Clostridien, Bacteroidesarten oder Arten der Gattung Eubacteria, da sie geruchsintensive Stoffe wie Schwefelwasserstoff oder flüchtige organische Säuren freisetzen.

Durch diese Steuerung der mikrobiellen Umsetzungen in der langsam zirkulierenden Gülle werden geruchsintensive organische Stoffe abgebaut, sowie Gallenstoffe, welche die Viskosität der Gülle erhöhen, zersetzt, sowie Ammoniumstickstoff organisch gebunden. Durch die Einstellung eines schwach sauren pH-Wertes wird die chemische Bildung gasförmigen Ammoniaks reduziert. Als Folgeeffekte dieser Umsetzungen werden Geruchsemissionen gezielt reduziert und die Verluste an Ammonium durch Ausgasung weitgehend unterbunden. Ein weiterer Effekt liegt in der hygienisierenden Umsetzung im sauren und mikroaerophilen Milieu, wodurch die Bildung von für den Menschen toxischer und übelriechender Substanzen unterbleibt und eine dünnflüssige, homogene Gülle niedrigerer Viskosität für eine verbesserte Ausbringung gewonnen wird.

Dabei wird der Abbau der Fäkalien in der kurzen Zeitspanne nach dem Absetzen mit der anaeroben Umsetzung von Aminosäuren und Amiden in Ammonium verzögert und die Ausgasung des stechend riechenden Ammoniakgases durch die gezielte Absenkung des pH-Wertes verhindert. Den Mikroorganismen steht so eine längere Zeitspanne zur Verfügung, das Ammonium als mikrobiellen Nährstoff in organisch gebundene Form überzuführen, bevor seine Konzentration so weit ansteigt, dass es die mikrobielle Stoffwechselaktivität hemmt. Die intermediär gebildeten organischen Säuren werden durch mikroaerophile Bakterien als Nährstoff- und Energiequelle verbraucht. Erstaunlicherweise kann die dazu notwendige geringe Luftmenge durch die vertikale Durchmischung und durch die fließende Fortbewegung der Gülle in diese ausreichend eingebracht werden.

Überraschenderweise zeigte sich auch, dass eine periodische Messung des pH-Wertes und die damit gekoppelte Zufuhr von organischen Säuren ausreichen, um die Fermentation zu regulieren, wobei zur Ermittlung des pH-Werts praktischerweise ein Betriebsdatenerfassungssystem zur Anwendung kommt. Die Kontrolle der Fermentation wird noch weiter erleichtert, wenn zusätzlich die aufzubringende Mischenergie gemessen wird, da diese in Zusammenhang mit der Viskosität der Gülle steht, wobei sich dazu beispielsweise vorzüglich die Messung der elektrischen Leistungsaufnahme der Mischvorrichtung eignet.

Es zeigte sich auch, dass die zur kontrollierten Fermentation erforderliche Verweilzeit und die zur dauerhaften Einstellung des pH-Wertes erforderliche Säuremenge wesentlich verringert werden kann, wenn die Gülle möglichst rasch nach dem Absetzen der Fäkalien durch das erfindungsgemäße Verfahren behandelt wird, da in der Gülle ansonsten mit fortschreitender Dauer einer unkontrollierten Lagerung oder Behandlung eine Verschiebung des pH-Wertes in den basischen Bereich und eine Anhäufung geruchswirksamer Stoffe stattfindet, die zu ihrer Beseitigung eine längere Verweilzeit und damit einen größeren Fermentationsbehälter beziehungsweise die Dosierung einer höheren Säuremenge erforderlich machen. Für die Anwendung des erfindungsgemäßen Verfahrens besonders geeignet hat sich Gülle gezeigt, die innerhalb von 3 Tagen nach dem Absetzen der Fäkalien in den Fermentationsbehälter zur kontrollierten Umsetzung gelangt, ohne daß jedoch die Behandlung von älteren und länger gelagerten Güllen ausgeschlossen wird. Wird die Gülle noch rascher der regulierten Fermentation zugeführt, beispielsweise innerhalb von 2 Tagen oder innerhalb von einem Tag nach dem Absetzen der Fäkalien oder werden im Stall oder im Güllekanal Additive verwendet und Maßnahmen gesetzt, die eine Alkalisierung vermindern, verringert sich die erforderliche Verweilzeit der Gülle im Fermentationsbehälter und die zuzuführende Säuremenge zur Steuerung des pH-Wertes weiter.

Zur Erreichung der weitgehenden Geruchsreduktion ist eine mittlere Verweilzeit zwischen einer Stunde und 10 Tagen ausreichend, wobei die im Einzelfall tatsächlich erforderliche Verweilzeit von der individuellen Beschaffenheit der Gülle und ihrer chemischen und mikrobiellen Zusammensetzung abhängt.

Die mikroaeroben Bedingungen in der zu behandelnden Gülle, die entscheidend zur regulierten Fermentation beitragen, werden erfindungsgemäß dadurch erreicht, dass sich die Gülle während der Behandlung in einem auf die tägliche Anfallsmenge abgestimmten Fermentationsbehälter zwischen Güllekanal und Güllelager befindet, in welchem durch eine geeignete Rührvorrichtung sowohl eine horizontale geschlossene Bewegung der Gülle um ein mittig im Fermentationsbehälter angebrachtes strömungsführendes Trennelement oder eine Wand erfolgt, als auch über den gesamten vertikalen Querschnitt des güllegefüllten Fermentationsbehälters zumindest an dem Ort, an dem sich die Rührvorrichtung befindet, eine Durchmischung der Gülle erfolgt. Die Rührvorrichtung, die entweder als Propeller, als Paddel , als Schraube oder als Schnecke ausgelegt sein kann, zwingt daher die Flüssigkeit in eine horizontal kreisende Bewegung um die mittig angebrachte Wand oder das Trennelement und sorgt gleichzeitig für eine vertikale Durchmischung, so dass kaum Sink- oder Schwimmschichten entstehen und durch die Bewegung so viel Sauerstoff in die Gülle eingebracht wird, dass das Wachstum von strikt anaeroben, fäulniserregenden Mikroorganismen unterdrückt wird.

Für die Eignung der Rührvorrichtung ist es wichtig, dass ihre Umdrehungsgeschwindigkeit zwischen 20 bis maximal 200 Umdrehungen pro Minute beträgt und gleichzeitig sowohl die Blattspitzengeschwindigkeit der Vorrichtung maximal 95 Meter pro Minute (m/min) beträgt als auch die maximale Fleißgeschwindigkeit der Gülle 20 m/min erreicht. Eine Überschreitung dieser Werte würde die Mikroorganismen in ihrer Stoffwechselaktivität beeinträchtigen, indem die durch sie gebildeten, biologisch besonders aktiven Schlammflocken durch zu starke Scherkräfte gestört werden. Andererseits bewirkt eine zu niedrige Umdrehungsgeschwindigkeit keinen genügenden Eintrag von Sauerstoff zur Unterbindung der Aktivität strikt anaerober Mikroorganismen. Noch besser ist es, die Umdrehungsgeschwindigkeit der Rührvorrichtung im Bereich zwischen 40 und 120 Umdrehungen pro Minute zu belassen.

Als besonders geeignet hat sich erwiesen, das mittig im Fermentationsbehälter angebrachte Trennelement als Gefäß mit guter Wärmeleitung auszuführen, das mit Wasser befüllt und beheizt wird, um für eine Erwärmung der Gülle auf eine Temperatur zwischen 10°C und 30°C während der regulierten Fermentation zu sorgen. Durch die Erwärmung steigen die mikrobiellen und chemischen Umsetzungsraten, wodurch die durchschnittliche Verweilzeit wiederum verkürzt werden kann.

Da die pH-Werte der meisten landwirtschaftlichen Güllen zwischen pH 7,0 und pH 8,0 liegen, und nur wenige einen zufallsbedingten Wert unter 7,0 aufweisen, muss zur Einstellung eines leicht sauren pH-Wertes Säure verwendet werden, wobei es gleichgültig ist, ob reine Säuren oder säurehältige Flüssigkeiten zur Anwendung kommen. Besonders geeignet zur regulierten Fermentation sind organische Säuren, die keinen unangenehmen Geruch hervorrufen und leicht abbaubar sind, da diese durch ihre Anregung der mikrobiellen Stoffwechselaktivität zur regulierten Fermentation aktiv beitragen. Für das Verfahren als besonders geeignet hat sich Essigsäure erwiesen, da es einen nicht als unangenehm empfundenen Geruch besitzt und einen sehr günstigen Effekt auf die mikrobielle Aktivität ausübt, bedingt durch seine zentrale Stellung im Grundstoffwechsel der Mikroorganismen.

Die Erfindung wird im Folgenden anhand von vier Beispielen und acht dazu gehörenden Figuren näher erläutert:

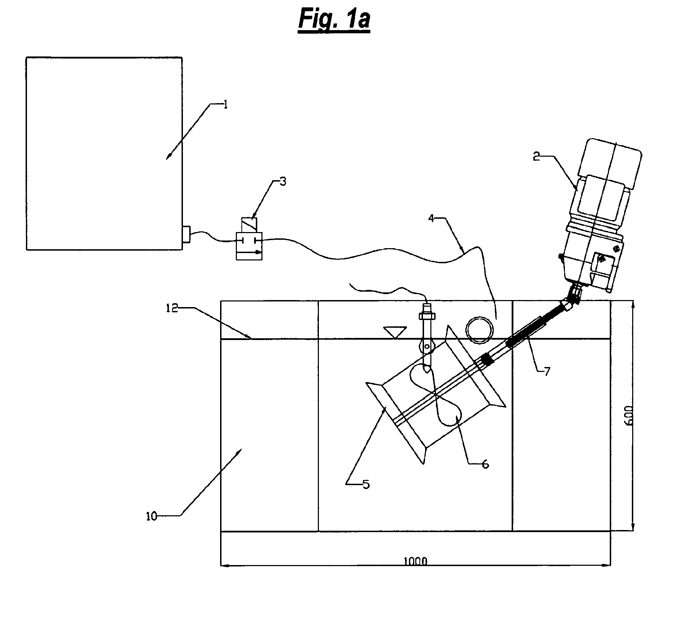

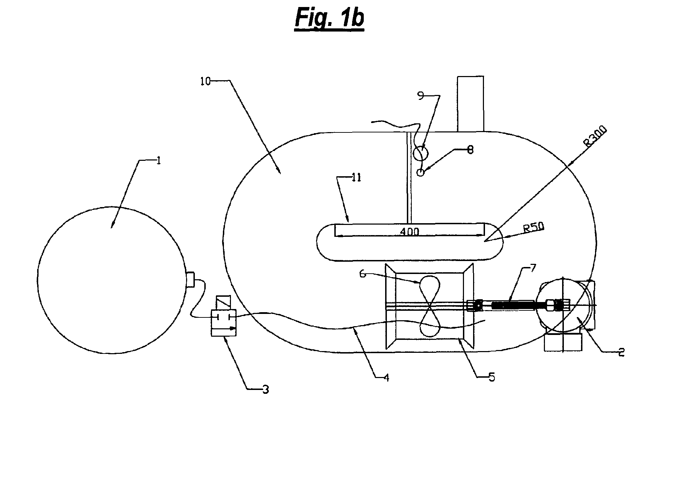

Fig. 1a und Fig. 1b zeigen schematisch in Aufriss und Grundriss einen Fermentationsbehälter, wie er für die Durchführung des erfindungsgemäßen Verfahrens geeignet ist, ohne dass andere Bauweisen, die der Beschreibung entsprechen, ausgeschlossen sind. In den Fermentationsbehälter 10 wird die frische Gülle aus dem Güllekanal 14 über einen Querkanal 15 geleitet und täglich so viel fermentierte Gülle über einen Überlauf 16 abgeleitet, dass der Flüssigkeitsstand 12 annähernd konstant bleibt. Die Durchmischung der Gülle erfolgt durch einen Propeller 6, der sich innerhalb eines Strömungsrohres 5 befindet und über eine Kardanwelle 7 durch einen Getriebemotor 2 angetrieben wird. Die Durchmischung zwingt die Gülle in eine fließende Bewegung um die Mittelwand 11 des Fermentationsbehälters. Während der regulierten Fermentation wird aus dem Säurebehälter 1 über ein Ventil 3 und eine Leitung 4 automatisiert Säure in den Fermentationsbehälter dosiert. Der pH-Wert der Gülle wird während der Behandlung durch eine pH-Sonde 8 gemessen, die Leitfähigkeit wird über eine Leitfähigkeitssonde 9 erfasst. Sowohl das Ventil 3 als auch die pH-Sonde 8 als auch die Leitfähigkeitselektrode 9 sind an ein automatisiertes Datenerfassungs- und Steuerungssystem angeschlossen. Dieses betätigt das Ventil 3 in Abhängigkeit der Messwerte der pH-Sonde 8 und der Leitfähigkeitselektrode 9.
Fig. 2 zeigt die Veränderung des pH-Wertes, der Viskosität, sowie der Konzentrationen an Ammonium und Gesamt-Stickstoff während der stufenweisen Behandlung von Rindergülle mit Essigsäure, Rühren und Belüften.
Fig. 3 zeigt die Veränderung des pH-Wertes, der Viskosität und der Leitfähigkeit während der automatisch regulierten Behandlung von Rindergülle mit Essigsäure und durch Rühren.
Fig. 4 zeigt schematisch im Grundriss die verfahrensgemässe Anordnung eines Fermentationsbehälters zwischen Güllekanal und Güllelager in einem beispielhaften Milchrinderbetrieb mit 40 Großvieheinheiten. Die Exkremente der Rinder, die sich im Stall 13 befinden, werden in einem Güllekanal 14 gesammelt und mittels eines Querkanals 15 in den Fermentationsbehälter 10 geleitet, an den der Säurebehälter 1 mit dem Ventil 3 angeschlossen ist. Die behandelte Gülle wird mittels eines Überlaufes 16 in das Güllelager 17 befördert.
Fig. 5 zeigt die Veränderung des pH-Wertes, der elektrischen Leistungsaufnahme des Rührwerkes und den Stickstoffgehalt in der Gülle als Gesamt-N während der erfindungsgemäßen Durchführung der Güllebehandlung in einem Praxisbetrieb.
Fig. 6 zeigt den Verlauf des pH-Wertes während der Lagerung nach der erfolgten erfindungsgemäßen regulierten Fermentation von drei verschiedenen Güllen, deren pH-Werte am Ende der Fermentation bei pH 5,5 beziehungsweise bei pH 6,1 beziehungsweise bei pH 6,5 lagen.
Fig. 7 zeigt die Gegenüberstellung der Geruchsintensitäten in drei verschiedenen Verdünnungsgraden mit Wasser von Gülle, die erfindungsgemäß reguliert fermentiert wurde, zu Gülle, die ohne weitere Behandlung gelagert wurde. In beiden Fällen wurde die gleiche Ausgangsgülle verwendet.

### Beispiel 1:

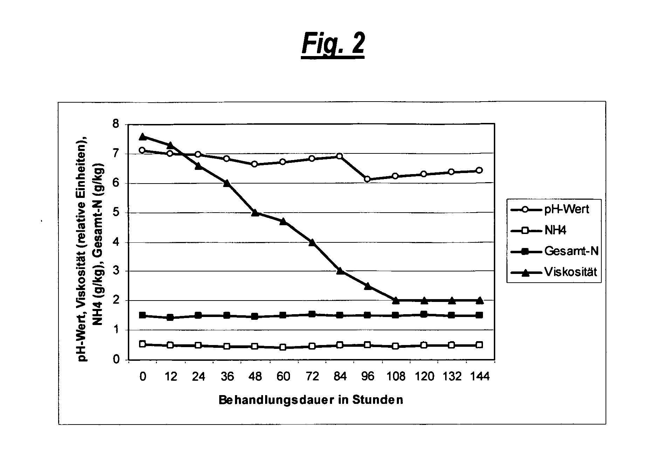

Ein Fermentationsbehälter 10 in ovaler Form mit den Abmessungen von 100 cm x 58 cm x 60 cm und einem elektrisch mit 0,12 kW betriebenem Propeller 6 mit einem Durchmesser von 15 cm sowie einem mittigen Trennelement 11 in der Ausführung eines mit ca. 24 Liter Wasser befüllten und beheizbaren Mitteltanks mit den Abmessungen 11cm x 50 cm wie in der Fig. 1 dargestellt, wurde mit 120 Liter einer verdünnten Rindergülle aus einem Laufstall eines Milchviehbetriebes mit einer Schubentmistung befüllt. Die frisch geworbene Gülle hatte eine Trockenmasse von 2,99 %, einen Gesamtstickstoffgehalt von 1,49 g/kg und einen Ammoniumgehalt von 0,51 g/kg und mit pH 7,45 einen alkalischen pH-Wert. Es wurde 0,5 Liter 30 %ige Essigsäure zugesetzt, wodurch ein Ausgangswert von pH 7,15 eingestellt wurde. Die Gülle wurde durch das Rührwerk mit einer Umdrehungszahl von 90 UPM (Umdrehungen pro Minute), sowie mit einer Blattspitzengeschwindigkeit von 42 m/min (Meter/Minute), als auch intervallweise mit max. 120 UPM und mit einer Blattspitzengeschwindigkeit von 57 m/min in eine langsame ovale Strömung mit einer Fließgeschwindigkeit von 6 bis 12 m/min um den Mitteltank versetzt. Der Mitteltank wurde mit einem elektrischen Heizstab auf eine Temperatur von 23° C aufgewärmt und hatte zur Folge, daß die Temperatur in der Gülle auf 19° C mit einer Schwankung von +- 1,5° C konstant gehalten werden konnte. Wie in Fig. 2 dargestellt sank innerhalb von 48 Stunden der pH-Wert auf 6,55. Jedoch war im weiteren Verlauf ein Anstieg des pH-Werts zu verzeichnen und nach weiteren 36 Stunden unter Rühren wurde ein pH-Wert von 6,81 erreicht. Nun wurde nochmals 0,5 Liter 30 % ige Essigsäure zugesetzt, wodurch der pH-Wert auf 6,1 abfiel. Dann wurde durch eine Verdoppelung der Rührfrequenz der Lufteintrag in die Gülle gesteigert, wodurch in der Folge bis zum Messpunkt 144 Stunden nach Beginn der Behandlung der pH-Wert wieder auf 6,5 anstieg und gleichzeitig aber der Ammoniumgehalt von 0,49 g/kg auf 0,45 g/kg abnahm. Der Gesamtstickstoffgehalt von 1,5 g/kg unterlag jedoch keiner Veränderung. Die mittels eines HAAKE-Viskosimeters bei einer Temperatur von 21° C ermittelte Viskosität verringerte sich um 27 % gegenüber dem Augsangswert. Bei geringerer Rührfrequenz kam es zum Erliegen der vollständigen Durchmischung, wie durch das Absetzen eines flockenartigen Schlamms am Behälterboden beobachtet wurde. Durch Erhöhung der Rührfrequenz konnte der feinflockige Schlamm vollständig aufgewirbelt werden. Die jeweiligen Veränderungen des pH-Wertes, des Ammoniumgehaltes und der Viskosität zeigten auf, dass durch die regulierte Fermentation durch gleichzeitige Steuerung der Säurezugabe und der Rührung bei konstanter Temperatur eine Senkung der Viskosität herbeigeführt werden kann, ohne dass bei einer Abnahme an Ammonium ein Verlust an Gesamtstickstoffs eintritt.

### Beispiel 2:

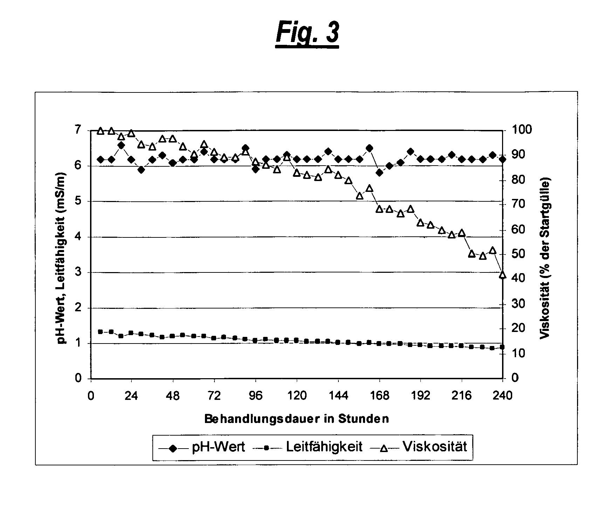

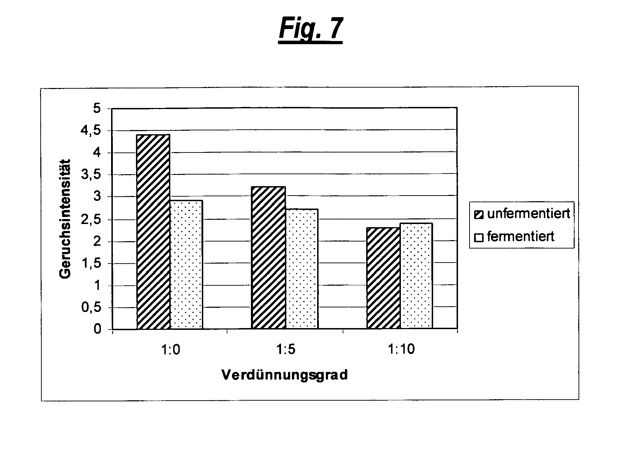

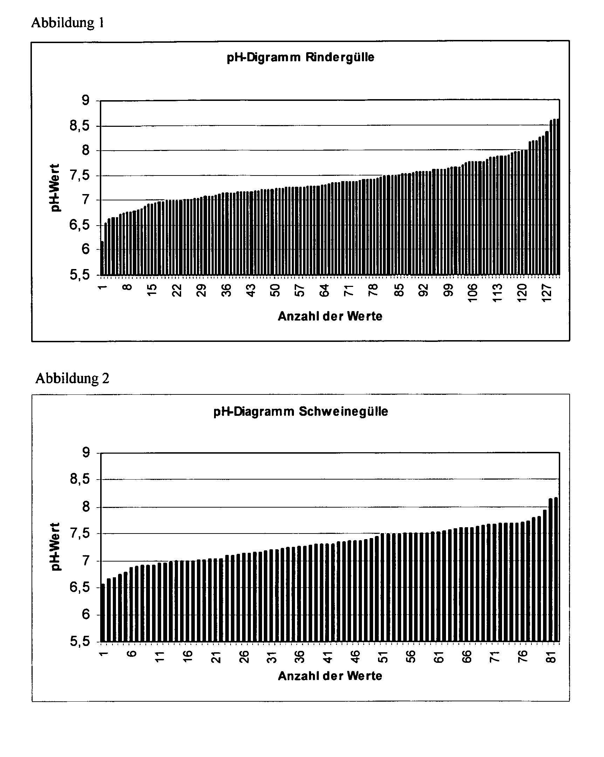

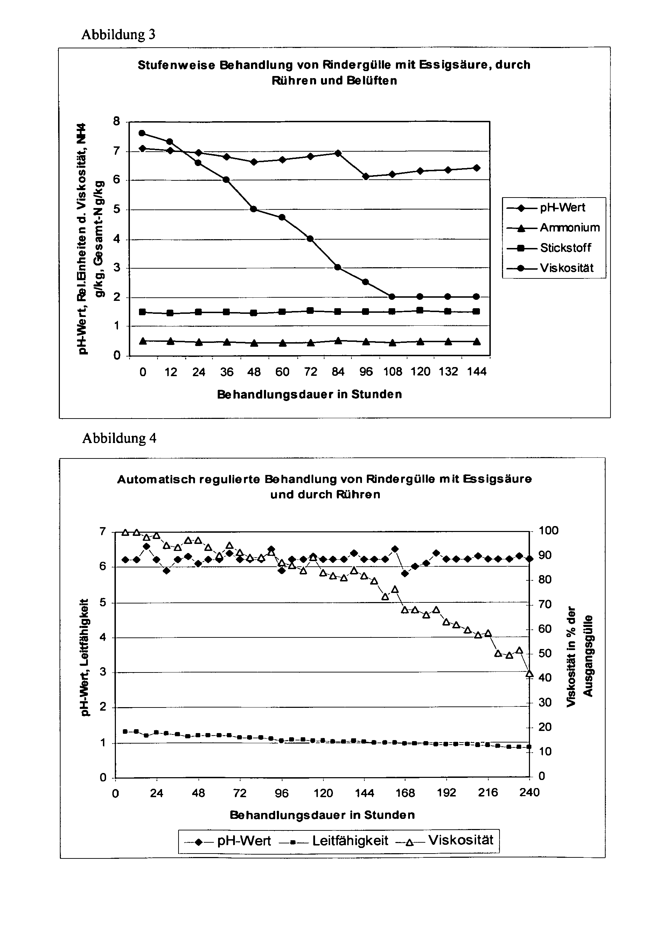

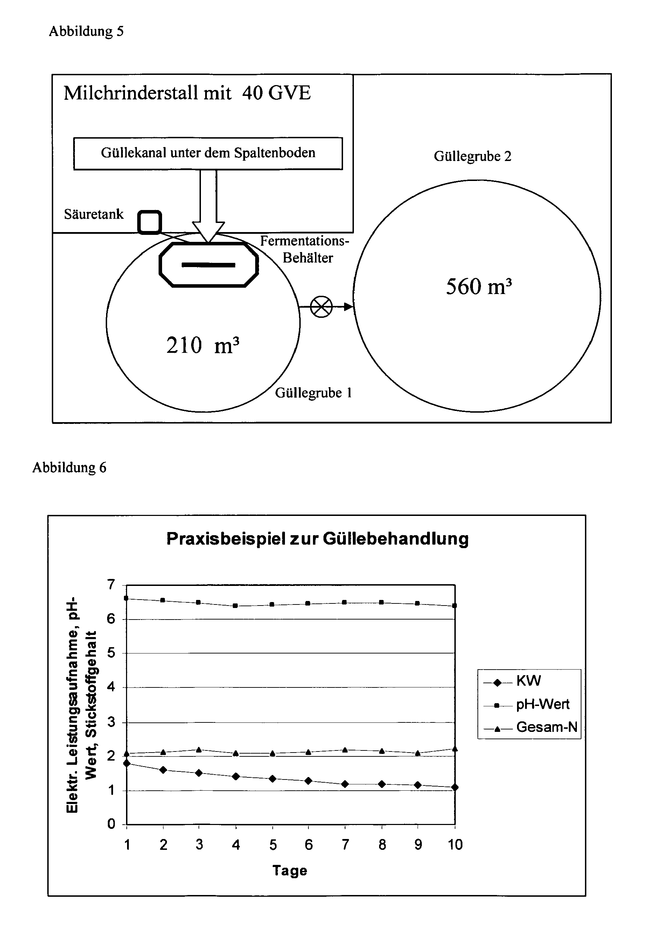

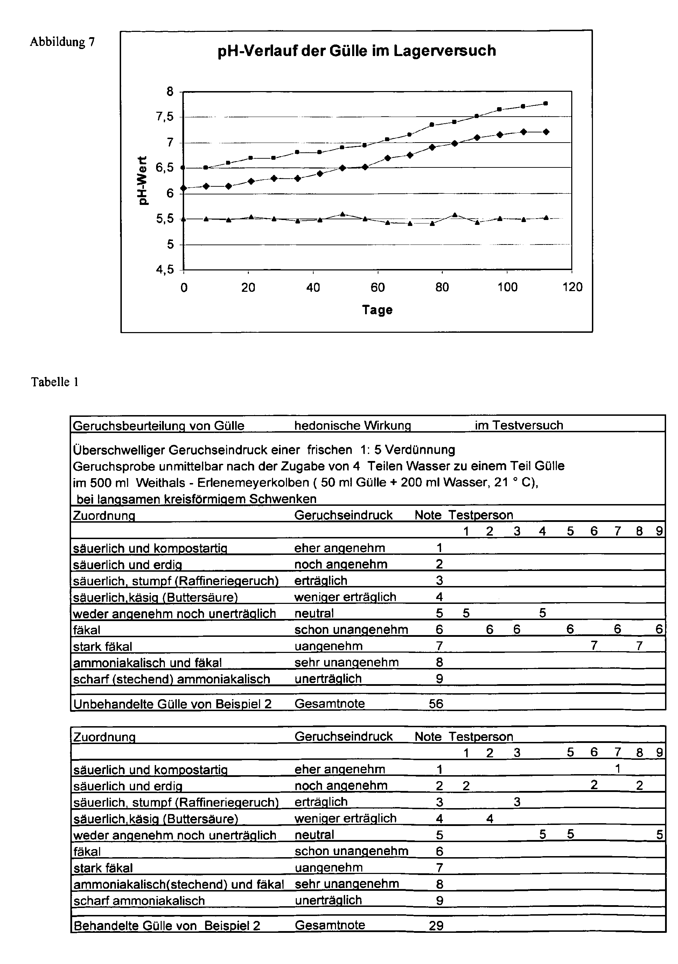

Ein Fermentationsbehälter 10 wie in Fig. 1 dargestellt wurde mit einer pH-Sonde 8 sowie einer Leitfähigkeitssonde 9 und mit einer Temperatursonde ausgestattet. Es wurde ein Datenerfassungs- und Steuerungssystem installiert, so dass aus einem Säurebehälter 1 über ein elektromechanisches Ventil 3 die automatische Zudosierung einer Säure möglich wurde. Der Säurebehälter wurde mit 30 Liter 10 %-iger Essigsäure befüllt, und das Steuerungsprogramm auf einen pH-Sollwert von pH 6,2 eingestellt. Zu einer im Fermentationsbehälter 10 vorgelegten Menge von 15 Liter Restschlamm einer vorbehandelten und 8 Wochen gelagerten Gülle wurden 115 Liter frische Gülle aus einem intensiv geführten Milchviehbetrieb mit einem Trockenmassegehalt von 3,9 % sowie einem Stickstoffgehalt von 2,15 kg und einem Ammoniumgehalt von 0,82 g/kg zugegeben. Durch manuellen Zusatz von 0,8 Liter einer 30 %-igen Essigsäure wurde der pH-Wert auf pH 6, 2 gebracht. Nun wurden täglich 15 Liter einer frischen Gülle zugeführt, wobei die gleiche Menge zeitgleich über den Weg eines Überlaufrohrs 16 aus dem Behälter 10 abfließen konnte und gesammelt wurde. Die Gülle wurde in fortwährender Fließbewegung mit einer Geschwindigkeit von 12 m/min gehalten und die Säure im Bereich des Rührwerks jeweils langsam eingemischt. Es zeigte sich wie in der Fig. 3 dargestellt, dass eine periodische Zuführung von frischer Gülle über den Zeitraum von 240 Stunden zu einem jeweils kurzfristigen Anstieg des pH-Wertes in einem Bereich zwischen pH 6,3 und maximal pH 6,6 führte. Dieser pH-Anstieg wurde jedoch innerhalb kurzer Zeit durch die automatische Zuführung der Essigsäure aus dem Säurebehälter kompensiert, so dass sich der programmierte Soll- pH-Wert von pH 6,2 wieder kurzfristig einstellte. Zusätzlich mit der im Rahmen von **±** 1,5 °C gleichbleibenden Temperatur und der gleichbleibenden Rührfrequenz von 90 UPM (Umdrehungen pro Minute) bzw. einer Blattspitzengeschwindigkeit von 42 m/min waren damit konstante Bedingungen für eine über einen längeren Zeitraum regulierte Fermentation gegeben, obwohl eine tägliche Zufuhr von frischer Gülle und Abfuhr von fermentierter Gülle im gleichen Maß erfolgte. Die Messung der Viskosität ergab eine stetige Abnahme um insgesamt 58 %, wobei die Zufuhr der frischen Gülle nur eine jeweils geringe Anhebung der Viskosität zur Folge hatte, welche innerhalb des Meßintervalls von 6 h kompensiert wurde und sich dann kontinuierlich verringerte. Die Leitfähigkeit sank von 1,3 mS/m (Millisiemens pro Meter) auf 0,8 mS/m ab und deutet darauf hin, dass trotz täglicher Zufuhr von gelösten Ionen die Ionenkonzentration in der Gülle abnahm. Der Anteil des Ammonium am konstanten Gesamtstickstoff sank von 38 % auf 24 % ab und lässt auf den Ammoniumverbrauch zur Neubildung von Biomasse schließen. Wie in Fig. 7 dargestellt, erreichte die Geruchsintensität der fermentierten Gülle laut Bewertung der Versuchspersonen im unverdünnten Zustand nur die Hälfte jener Intensität, wie sie durch einfach gelagerte Gülle erreicht wurde. Der Geruchseindruck der fermentierten Gülle lag im Bereich zwischen angenehm bis neutral, wohingegen die einfach gelagerte Gülle mit einer zwischen neutral bis unangenehm eingestuft wurde.

### Beispiel 3:

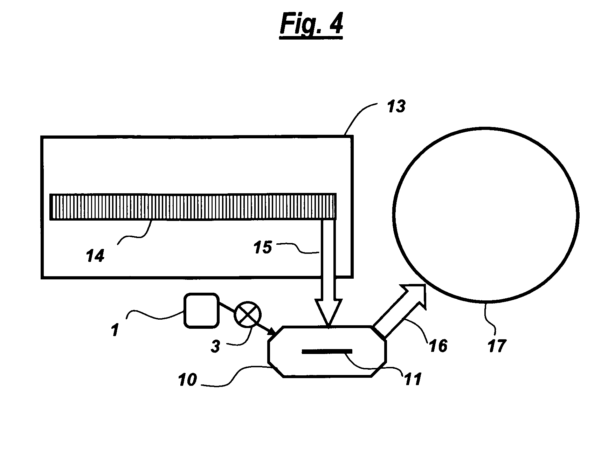

Im Stall 13 eines Milchviehbetrieb mit 40 Großvieheinheiten mit einer Entmistung über Spaltenböden und einer täglich durchschnittlich anfallenden Güllemenge von 1,9 m³ wurde unmittelbar bei der Einmündung des Schwemmkanals 15 in das Güllelager 17 mit einer Lagerkapazität von 210 m³ wie in Fig. 4 dargestellt, ein ovaler Fermentationsbehälter 10 mit einem Arbeitsvolumen von 11 m³ angeordnet. Der Propeller des Rührwerks hatte einen Durchmesser von 95 cm, welcher über eine Untersetzung und einen Drehzahlregler mit der Mindestumdrehungszahl von 60 UPM von einem elektrischen Motor angetrieben wurde. Die Umdrehungszahl wurde so eingestellt, dass eine maximale Blattspitzengeschwindigkeit von 180 m/min erreicht wurde. Mit Hilfe des Drehzahlreglers mit analogem Ausgang konnte die Leistungsaufnahme des Motors im Bereich zwischen 50 W und 2200 W abgelesen und dokumentiert werden. Der Anstellwinkel des Rührwerks betrug 15 °.

Die frische Gülle der Milchrinder wurde mit dem aus der Milchkammer täglich anfallenden Waschwasser verdünnt und täglich in den Fermentationsbehälter 10 geleitet, bis dieser nach 5 Tagen mit insgesamt 9 m³ Gülle gefüllt war. Die Messung der Gülle ergab eine Trockenmasse von 4,1 % sowie einen Gesamtstickstoffgehalt von 2,1 g/kg und eine Konzentration von 0,7 g/kg Ammonium. Danach wurde die Gülle mit 50 Liter 60 %-iger Essigsäure auf einen pH-Wert von pH 6,6 eingestellt und mit einer Geschwindigkeit von 5 m/min in langsame Bewegung um das Trennelement 11 versetzt. Der Behälter 10 verfügte über einen pH-Sensor 8 und über ein automatisches Steuerungssystem, mit dem durch Dosierung von 20 %-iger Essigsäure aus dem Säurebehälter 1 der pH-Sollwert von 6,5 über den Zeitraum von 10 Tagen konstant gehalten wurde. Die Temperatur der Gülle betrug durchschnittlich 20 °C mit einer Abweichung von ± 4 °C.

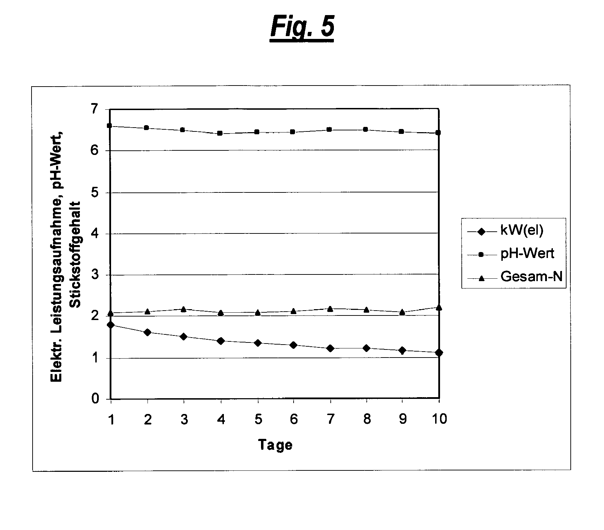

Es zeigte sich wie in Fig. 5 dargestellt, dass der pH-Wert nach der anfänglichen Einstellung auf pH 6,6 auf den Sollwert von pH 6,4 absank und bei diesem Wert weitgehend konstant gehalten werden konnte. Dabei wurden nach 10 Tagen Betriebsdauer und nach einer regulierten Fermentation von insgesamt etwa 18 m³ Gülle insgesamt 39 Liter der 20 %-igen Essigsäure verbraucht. Gleichzeitig verringerte sich die Leistungsaufnahme des Motors von 1,8 kW(el) bei Versuchsbeginn auf 1,1 kW(el) bei Versuchsende mit einer Schwankungsbreite von 0,275 kW(el) während der laufenden Zufuhr von frischer Gülle. Die Viskosität sank gegenüber dem Versuchsbeginn um 31 % . Eine Ausgasung von flüchtigen Komponenten war nicht festzustellen und der Gesamtstickstoffgehalt blieb konstant.

### Beispiel 4:

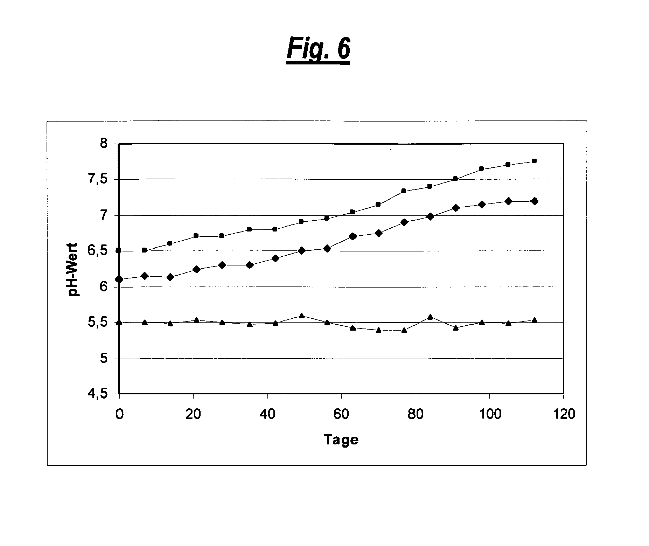

120 Liter einer wie im Beispiel 1 über einen Zeitraum von 10 Tagen fermentierten Gülle mit einem pH-Wert von 6,5 wurden nach der Fermentation in einen Nachlagerbehälter gegeben, dort wurde der pH-Wert mit 0,4 Liter 30 %-iger Essigsäure auf einen pH-Wert von 6,1 eingestellt und die so nachlagernde fermentierte Gülle für die nächsten 112 Tage täglich morgens und abends je eine Stunde gerührt, wobei der Rührpropeller mit 80 UPM und mit einer Blattspitzengeschwindigkeit von 28 m/min betrieben wurde. Ein paralleles zweites Experiment mit weiteren 120 Litern der gleichen Gülle wurde mittels eines weiteren Nachlagerbehälters gleichartig betrieben, mit dem Unterschied, dass der pH-Wert zu Beginn der Nachlagerung auf pH 6,5 eingestellt wurde. In einem dritten parallelen Experiment wurden 80 Liter der gleichen Ausgangsgülle mit 1,3 Liter 30 %-iger Essigsäure versetzt, diese in ein Fass gefüllt und ohne weiteres Rühren in der folgenden 112-tägigen Lagerzeit unter anaeroben Bedingungen die Veränderungen des pH-Wertes gemessen. Es wurde also die bereits fermentierte Gülle auf drei Experimente zur Nachlagerung aufgeteilt, in denen zu Beginn jeweils unterschiedliche pH-Werte eingestellt wurden und die bis auf das dritte Experiment gerührt wurden. Die Temperatur wurde nicht reguliert, die Durchschnittstemperatur lag bei 18 °C. Die Ergebnisse der pH-Messung in allen drei Experimenten sind in der Fig. 6 zu sehen. Die erzielten Effekte des Beispiels 4 zeigen auf, dass eine Versäuerung der Gülle aufgehoben werden kann bzw. sich der bei einer regulierten Fermentation eingestellte saure pH-Wert durch eine Nachlagerung, bei welcher die Gülle periodisch gerührt wird, in Richtung eines alkalischen Zustandes verändert. Ist jedoch ein pH-Wert von < 5,5 eingestellt, wird eine weitere mikrobielle Umsetzung und damit einen wesentlicher Anstieg des pH-Werts verhindert. Die Intensität des Güllegeruches nahm innerhalb der viermonatigen Lagerzeit weiter ab.

## Patentansprüche

1. Verfahren zur regulierten Fermentation von Güllen, mit welchem unter einem die Stickstoffverluste, die Viskosität und Geruchsemissionen vermindert werden können, **dadurch gekennzeichnet, dass** die Gülle innerhalb von 3 Tagen nach dem Absetzen der Fäkalien in einen nach oben offenen, auf die tägliche Anfallsmenge abgestimmten Fermentationsbehälter zwischen Güllekanal und Güllelager zur regulierten Fermentation eingeleitet wird, in dem die mittlere Verweildauer der Gülle mindestens 1 h und maximal 10 Tage beträgt, und in dem die Gülle durch eine geeignete, als Propeller, Paddel, Schraube oder Schnecke ausgelegte Rührvorrichtung in eine horizontal kreisende Fließbewegung um eine mittig im Behältnis angebrachte Wand oder ein Trennelement gezwungen wird, und die Rührvorrichtung mit einer Umdrehungsfrequenz von mindestens 20 bis maximal 200 Umdrehungen pro Minute und mit einer maximalen Blattspitzengeschwindigkeit des Rührelements von maximal 300 m/min und einer maximalen Fließgeschwindigkeit der Gülle von 20 m/min jedenfalls eine schraubenförmige Durchmischung der Gülle im gesamten Querschnitt des Fermentationsbehälters auf zumindest einer Seite der mittig angebrachten Wand oder des Trennelements und an mindestens einer Stelle bewirkt, und der Fermentationsbehälter mit mindestens einer Messvorrichtung für den pH-Wert und einer Dosiervorrichtung für Säuren oder säurehaltige Flüssigkeiten ausgelegt ist, womit ein bestimmter, vorprogrammierter pH-Wert, vorzugsweise pH 6,5, mit einer Abweichung von maximal ± 0,2 Einheiten im Bereich zwischen 6,0 und 7,0 konstant gehalten werden kann.

2. Verfahren nach Anspruch 1, **dadurch gekennzeichnet, dass** die Gülle vorzugsweise innerhalb von 2 Tagen, besonders bevorzugt innerhalb von einem Tag nach dem Absetzen der Fäkalien in den Fermentationsbehälter eingeleitet wird.

3. Verfahren nach einem der Ansprüche 1 oder 2, **dadurch gekennzeichnet, dass** die Umdrehungsfrequenz der Rührvorrichtung vorzugsweise mindestens 20 bis maximal 200 Umdrehungen pro Minute, besonders bevorzugt mindestens 40 bis maximal 60 Umdrehungen pro Minute beträgt.

4. Verfahren nach einem der Ansprüche 1, bis 3, **dadurch gekennzeichnet, dass** die Fließgeschwindigkeit zwischen 1 m/min und 20 m/min, besonders bevorzugt zwischen 6 und 12 m/min beträgt.

5. Verfahren nach einem der Ansprüche 1 bis 4, **dadurch gekennzeichnet, dass** im Fermentationsbehälter die Viskosität der Gülle gemessen wird.

6. Verfahren nach einem der Ansprüche 1 bis 5, **dadurch gekennzeichnet, dass** die Messung der Viskosität der Gülle durch die Messung der elektrischen Leistungsaufnahme der Rührvorrichtung durchgeführt wird.

7. Verfahren nach einem der Ansprüche 1 bis 6, **dadurch gekennzeichnet, dass** während der regulierten Fermentation die Temperatur der Gülle gemessen wird.

8. Verfahren nach einem der Ansprüche 1 bis 7, **dadurch gekennzeichnet, dass** das mittig angeordnete Trennelement mit einer wärmeleitenden Flüssigkeit, bevorzugt mit Wasser befüllt und beheizt werden kann.

9. Verfahren nach einem der Ansprüche 1 bis 8, **dadurch gekennzeichnet, dass** als Säure bevorzugt Essigsäure eingesetzt wird.

10. Vorrichtung zur regulierten Fermentation von Gülle, **dadurch gekennzeichnet, dass** die Vorrichtung aus einem nach oben offenen Fermentationsbehälter 10, einem Zulauf 15 für die Gülle, einem Überlauf 16 für die behandelte Gülle, einer Rühreinrichtung 6, die innerhalb eines Strömungsrohres 5 situiert ist, einem Antrieb 2 mit einer Kardanwelle 7 für die Rühreinrichtung 6 , einer Mittelwand 11, um die die Gülle durch die Rühreinrichtung unter schraubenförmiger Durchmischung bewegt wird, einem Vorratsbehälter 1 und einem Dosierventil 3 für die Säure, sowie Messeinrichtungen für den pH-Wert 8 und die Leitfähigkeit 9, wobei das Dosierventil 3 in Abhängigkeit von den Messwerten der Messeinrichtungen 8 und 9 gesteuert wird, besteht.

11. Vorrichtung nach Anspruch 6, **dadurch gekennzeichnet, dass** die Mittelwand als Behälter ausgeführt ist.

12. Vorrichtung nach einem der Ansprüche 10 bis 11, **dadurch gekennzeichnet, dass** zusätzlich eine Einrichtung zur Messung der Viskosität und/oder eine Einrichtung zur Messung der Temperatur der Gülle vorgesehen ist.
